# EUROPEAN PATENT APPLICATION

(11) **EP 4 775 415 A1**
(43) Date of publication of application: **15.07.2026**
(21) Application number: 25151015.2
(22) Date of filing: 09.01.2025
(51) Int. Cl.: B60D 1/155, B60D 1/30, B60D 1/62, B60D 1/66

(54) **COUPLING SYSTEMS FOR VEHICLE COMBINATIONS**

(71) Applicant: Volvo Truck Corporation, 405 08 Göteborg (SE)
(72) Inventor: GELSO, Esteban, VÄSTRA FRÖLUNDA (SE); SADEGHI KATI, Maliheh, ÖJERSJÖ (SE); ERDINC, Umur, GÖTEBORG (SE)
(74) Representative: Ström & Gulliksson AB

(57) **Abstract**

A system (300) comprising: a coupling (200) configured to connect to a first unit (120) of a vehicle combination (100) at a first end (240) and to a second unit (140) of the vehicle combination (100) at a second end (250), the coupling (200) comprising: a first strut (210) and a second strut (220) extending between the first and second ends (240, 250) of the coupling (200) and disposed at an angle (α) to each other, and a respective actuator (210c, 220c) provided on each of the first and second struts (210, 220), each actuator (210c, 220c) configured to adjust the length of the respective strut (210, 220); and processing circuitry (155, 175, 275, 602) configured to determine a control input for adjusting the length of at least one of the first and the second struts (210, 220) using the respective actuator (210c, 220c) to adjust a force (F) acting on the coupling (200).

## Description

### TECHNICAL FIELD

The disclosure relates generally to vehicle control. In particular aspects, the disclosure relates to coupling systems for vehicle combinations. The disclosure can be applied to heavy-duty vehicles, such as trucks and construction equipment, among other vehicle types. In particular, the disclosure can be applied in vehicle combinations comprising a dolly vehicle.

### BACKGROUND

Vehicle combinations are important in industries that require high-capacity freight transportation. In a vehicle combination, a tractor unit is typically arranged to tow a trailer unit via a kingpin coupling. In order to extend the cargo transport ability of the semitrailer vehicle, a coupling such as a dolly vehicle can be added to the vehicle combination, which allows for additional trailer units to be towed by the same tractor unit. In this way, the dolly vehicle serves as an intermediary unit configured to link multiple trailer units to each other while allowing relative motion between the vehicle units.

However, controlling motion of vehicle combinations, in particular multi-unit vehicle combinations, is challenging due to the complexity of coordinating and manoeuvring multiple vehicle units together. The articulation allowed between vehicle units can lead to significant difficulties in maintaining stability and controlling the overall manoeuvrability of the vehicle combination. Consequently, effective motion management of the units of a vehicle combination is important for ensuring safety, stability, and control of the vehicle combination.

It is therefore desired to provide systems, methods and other approaches for coupling systems for vehicle combinations that attempt to resolve or at least mitigate one or more of these issues.

### SUMMARY

This disclosure provides systems, methods and other approaches for adjusting forces acting on a coupling configured to connect a first unit of a vehicle combination to a second unit of the vehicle combination. The coupling comprises a first and a second strut extending between the vehicle units. Each of the first and second struts are further provided with a respective actuator configured to adjust the length of the respective strut. The length of a strut is adjusted based on a control input which has been determine in order to adjust a force acting on the coupling. In this way, the direction and the magnitude of the force acting on the coupling may be adjusted such that the lateral and longitudinal motion of the vehicle units is controlled in an improved manner. As such, the coupling may be used to control motion of the vehicle combination and improve the stability and manoeuvrability of the vehicle combination.

According to a first aspect of the disclosure, there is provided a system comprising a coupling configured to connect to a first unit of a vehicle combination at a first end and to a second unit of the vehicle combination at a second end, the coupling comprising a first strut and a second strut extending between the first and second ends of the coupling and disposed at an angle to each other, and a respective actuator provided on each of the first and second struts. Each actuator is configured to adjust the length of the respective strut. The system further comprises processing circuitry configured to determine a control input for adjusting the length of at least one of the first and the second struts using the respective actuator, to adjust a force acting on the coupling.

The first aspect of the disclosure may seek to provide a system for adjusting the forces acting on a coupling between two units of a vehicle combination, by determining a control input for adjusting the length of a part of the coupling. A technical benefit may include that the stability and manoeuvrability of the vehicle combination may be improved, as the system enables the lateral and longitudinal motion of the vehicle units to be controlled by adjusting the direction and the magnitude of forces acting on the coupling between the vehicle units.

Optionally in some examples, including in at least one preferred example, each of the first strut and the second strut comprises a first end portion and a second end portion, wherein each first end portion is pivotable in relation to the other first end portion and each second end portion is pivotable in relation to the second unit of the vehicle combination. A technical benefit may include that the struts are enabled to move relative to each other which enhances the flexibility and adjustability of the coupling.

Optionally in some examples, including in at least one preferred example, the system further comprises a sensor system configured to provide sensor data relating to the force acting on the coupling to the processing circuitry. A technical benefit may include that the system is enabled to directly monitor the force acting on the coupling due to the dynamic interactions between the first unit, the coupling and the second unit. In this way, the processing circuitry is enabled to determine the control input based on current conditions.

Optionally in some examples, including in at least one preferred example, the sensor data comprises one or more of a lateral force and a longitudinal force acting on each of the first and second struts. A technical benefit may include that the sensor system provides precise information about the distribution of the forces acting on the coupling, such that a more appropriate control input may be determined for each strut.

Optionally in some examples, including in at least one preferred example, the sensor system comprises one or more of a load cell and a strain gauge positioned on each of the first and second struts. A technical benefit may include that the sensor system is enabled to detect changes in force on each strut with high sensitivity and reliability.

Optionally in some examples, including in at least one preferred example, the sensor system comprises a respective sensor configured to measure a pressure inside each actuator, the pressure indicating one or more of the lateral force and the longitudinal force acting on each of the first and second struts. A technical benefit may include that by integrating the force measurement into the actuators, the system take advantage of the pressurized hydraulic or pneumatic systems already present in the actuators, such that the complexity, weight, and cost of the system may be reduced.

Optionally in some examples, including in at least one preferred example, the system further comprises a sensor system configured to provide sensor data relating to one or more vehicle unit parameters to the processing circuitry, and the processing circuitry is configured to estimate one or more of a lateral force and a longitudinal force acting on each of the first and second struts based on the vehicle unit parameters using a vehicle model. A technical benefit may include that the system avoids the need to place sensitive sensor components directly on the coupling which may be subj ect to vibrations, risk of impact, and weather exposure. Further, the system may take advantage of sensors already present on the vehicle units, and the use of a vehicle model enables data from multiple vehicle unit sensors to be integrated, allowing distributed dynamic effects such as load transfers and yaw moments to be taken into account when estimating the forces on the coupling, which sensors positioned directly on the coupling may not capture.

Optionally in some examples, including in at least one preferred example, the one or more vehicle unit parameters comprises one or more of an acceleration of each vehicle unit, a yaw rate of each vehicle unit, an articulation angle between vehicle units, a steering angle of the first vehicle unit, a wheel speed of one or more wheels of each of the first and second units of the vehicle combination, and a wheel force of one or more wheels of each of the first and second units of the vehicle combination. A technical benefit may include these vehicle parameters capture critical aspects of vehicle motion and account for dynamic interactions between vehicle units.

Optionally in some examples, including in at least one preferred example, the control input is determined such that a distance between the first and second unit of the vehicle combination is changed. A technical benefit may include that by decreasing the distance between vehicle units, the manoeuvrability of the vehicle combination is enhanced as its turning radius is decreased. By increasing the distance between vehicle units, the stability of the vehicle combination may be improved, particularly at higher speeds, as the risk of lateral forces causing sway, j ack-knifing, or instability is reduced. During straight-line travel, reducing the distance may instead be beneficial to optimize load distribution and reduce aerodynamic drag, leading to improved fuel efficiency.

Optionally in some examples, including in at least one preferred example, the control input is determined such that an angle between the first and second unit of the vehicle combination is changed. A technical benefit may include that the articulation angle between vehicle units may be controlled for example to improve the manoeuvrability of the vehicle combination during turns or to counteract dynamic behaviours such as jack-knifing.

Optionally in some examples, including in at least one preferred example, the control input is determined in order to reach an obj ective, comprising at least one of improving vehicle stability, counteracting jack-knifing, reducing swept path width, reducing rearwards amplification and/or reducing air resistance. A technical benefit may include that the coupling may be actively controlled in order to improve the stability, manoeuvrability and aerodynamic efficiency of the vehicle combination as a whole.

Optionally in some examples, including in at least one preferred example, the control input comprises a force to be applied as at least one pulse to the at least one of the first and the second struts during a time t. A technical benefit may include that by determining the control input in this way, both the force to be applied and the time for applying it is controlled, which will affect the dynamic behaviour of the vehicle combination. For example, the control input may be determined to apply a strong force during an extended time t, which allows for a steady and gradual adjustment of the strut, or the control input may for example be determined to quickly and repeatedly apply a limited force as a plurality of short duration pulses.

Optionally in some examples, including in at least one preferred example, the coupling further comprises a third strut, wherein the third strut comprises a first end portion configured to be pivotably connected to the first unit of the vehicle combination, a second end portion, configured to be pivotably connected to the first end portions of the first and second strut, and an actuator configured to adjust the length of the third strut based on control input determined by the processing circuitry. A technical benefit may include that the third strut allows for precise tuning of the distance between the first and second unit of the vehicle combination.

Optionally in some examples, including in at least one preferred example, each respective actuator is a hydraulic, pneumatic or electronic actuator. A technical benefit may include quick and precisely controlled length adjustment of the struts, enabling rapid adjustment to changing conditions.

Optionally in some examples, including in at least one preferred example, the coupling further comprises at least two wheels and a kingpin coupling. A technical benefit may include that the coupling may function as a dolly vehicle.

According to a second aspect of the disclosure, there is provided a vehicle combination comprising the system. The second aspect of the disclosure may seek to provide a vehicle capable of determining a control input for adjusting a force acting on a coupling between two units of the vehicle combination. Thereby, the direction and magnitude of the force may be adjusted by adjusting a length of a strut of the coupling, such that the lateral and longitudinal motion of the vehicle units is controlled. A technical benefit may include the provision of a vehicle combination with improved stability and manoeuvrability.

According to a third aspect of the disclosure, there is provided a computer system for adjusting a force acting on a coupling configured to connect to a first unit of a vehicle combination at a first end and to a second unit of the vehicle combination at a second end, wherein the coupling comprises a first strut and a second strut extending between the first and second ends of the coupling and disposed at an angle to each other and a respective actuator provided on each strut configured to adjust the length of the respective strut, wherein the computer system comprises processing circuitry configured to acquire data relating to a force acting on the coupling, determine a control input for adjusting the length of at least one of the first and the second struts, to adjust the force acting on the coupling, and cause the determined control input to be applied by the respective actuator of the at least one of the first and the second struts such that the length of the at least one strut is adjusted.

The third aspect of the disclosure may seek to may seek to provide a computer system for adjusting a direction and magnitude of a force acting on a coupling between two vehicle units, by adjusting the length of a strut of the coupling. A technical benefit may include that the computer system enables the lateral and longitudinal motion of the vehicle units to be controlled, such that the stability and manoeuvrability of the vehicle combination may be improved.

According to a fourth aspect of the disclosure, there is provided a computer-implemented method for adjusting a force acting on a coupling configured to connect to a first unit of a vehicle combination at a first end and to a second unit of the vehicle combination at a second end, wherein the coupling comprises a first strut and a second strut disposed at an angle to each other and a respective actuator configured to adjust the length of the respective strut, the method comprising; acquiring, by processing circuitry of a computer system, data relating to a force acting on the coupling, determining, by the processing circuitry, a control input for adjusting the length of at least one of the first and the second struts, to adjust the force acting on the coupling, causing, by the processing circuitry, the determined control input to be applied by the respective actuator of the at least one of the first and the second struts such that the length of the at least one strut is adjusted.

The fourth aspect of the disclosure may seek to provide a computer-implemented method for adjusting a direction and magnitude of a force acting on a coupling between two vehicle units, by adjusting the length of a strut of the coupling. A technical benefit may include that the computer-implemented method enables the lateral and longitudinal motion of the vehicle units to be controlled such that the stability and manoeuvrability of the vehicle combination may be improved.

According to a fifth aspect of the disclosure, there is provided a computer program product comprising program code for performing, when executed by processing circuitry, the computer-implemented method to enable new vehicles and/or legacy vehicles to be conveniently configured, by software installation/update, to determine a control input for adjust forces acting on a coupling between two units of a vehicle combination, and adjusting a length of a strut of the coupling based on the control input. A technical benefit may include improved stability and manoeuvrability of the vehicle combination.

According to a sixth aspect of the disclosure, there is provided a non-transitory computer-readable storage medium comprising instructions, which when executed by processing circuitry, cause the processing circuitry to perform the computer-implemented method. The sixth aspect of the disclosure may seek to enable new vehicles and/or legacy vehicles to be conveniently configured, by software installation/update, to determine a control input for adjusting forces acting on a coupling between two units of a vehicle combination, and adjust a length of a strut of the coupling based on the control input. A technical benefit may include improved stability and manoeuvrability of the vehicle combination.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1A** schematically shows a side view of units of an example vehicle combination.
**FIG. 1B** schematically shows a side view of an example vehicle combination.
**FIG. 2** schematically shows a coupling according to an example.
**FIG. 3** schematically shows a system according to an example.
**FIG. 4A** schematically shows forces acting on a coupling of a vehicle combination in a first example.
**FIG. 4B** schematically shows forces acting on a coupling of a vehicle combination in a second example.
**FIG. 5** is a flow chart of a computer-implemented method according to an example.
**FIG. 6** is a schematic diagram of a computer system for implementing examples disclosed herein.

Like reference numerals refer to like elements throughout the description.

### DETAILED DESCRIPTION

The detailed description set forth below provides information and examples of the disclosed technology with sufficient detail to enable those skilled in the art to practice the disclosure.

Controlling motion of vehicle combinations, in particular multi-unit vehicle combinations, is challenging due to the complexity of coordinating and manoeuvring multiple vehicle units together. Phenomena such as jack-knifing, trailer sway, and rearward amplification may occur due to instability of forces acting on the units of the vehicle combination, often influenced by factors like vehicle speed, steering inputs, road conditions, and dynamic interactions between the vehicle units. For example, j ack-knifing may occur when excessive forces at the coupling between vehicle units cause a trailing unit to swing uncontrollably toward the towing vehicle, typically during hard braking or sharp turns, resulting in an extreme articulation angle. Trailer sway may occur when external forces, such as wind gusts, uneven road surfaces, or sudden steering inputs, cause lateral oscillations in the trailer which can escalate if not controlled. Rearward amplification may arise when small steering inputs or disturbances at the towing vehicle are amplified as they propagate through the trailing units, leading to exaggerated lateral movements in the trailing units. Further, manoeuvring a vehicle combination during low speed manoeuvres, such as parking or negotiating tight turns, may requires a high level of skill and coordination.

To remedy this, systems, methods and other approaches are provided for adjusting forces acting on a coupling configured to connect a first unit of a vehicle combination to a second unit of the vehicle combination. The coupling comprises a first and a second strut extending between the vehicle units, disposed at an angle to each other and connecting to the first vehicle unit at a respective first end and to the second vehicle unit at a respective second end. Each of the first and second struts are further provided with a respective actuator configured to adjust the length of the respective strut. The length adjustment is performed based on a control input which has been determine in order to adjust a force acting on the coupling. By adjusting the length of at least one of the struts, the direction and the magnitude of the force acting on the coupling is adjusted and thereby the lateral and longitudinal motion of the vehicle combination.

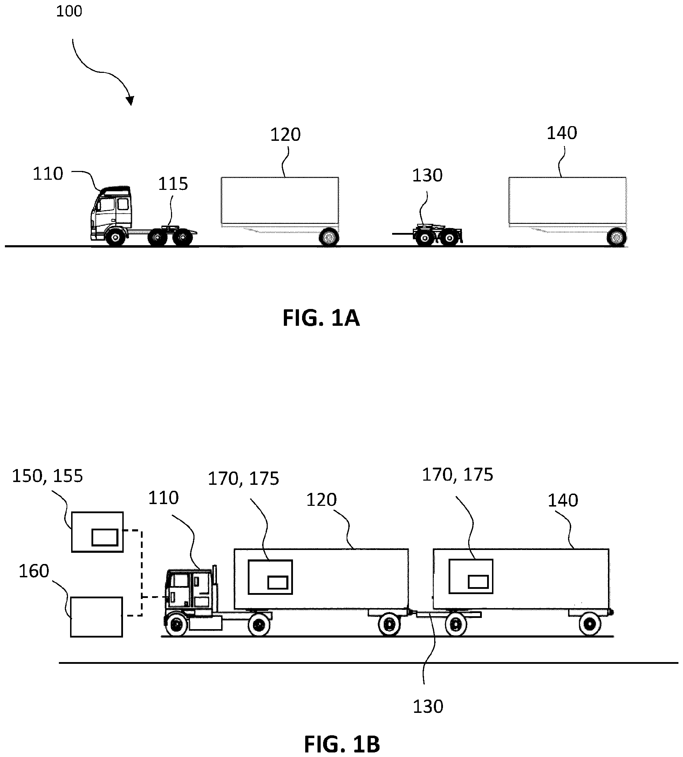

**FIG. 1A** schematically shows a side view of an example vehicle combination **100** of the type considered in this disclosure. The vehicle combination **100** comprises a tractor unit **110** (e.g. a truck or towing vehicle) configured to tow a first trailer unit **120** in a known manner, e.g., by a kingpin coupling **115.** To extend the cargo transport capability of the vehicle combination **100,** a coupling **130** such as a dolly vehicle can be connected to the rear of the first trailer unit **120,** for example via a drawbar. This coupling **130** can then tow a second trailer unit **140,** thus increasing the cargo transport capacity of the vehicle combination **100.**

While **FIG. 1A** shows a vehicle combination **100** comprising two trailing units **120, 140** and one coupling **130,** it will be appreciated that more than one coupling **130** can be added to a vehicle combination **100** in order to tow more than one extra trailer unit, giving rise to different types and designations of vehicle combinations. For example, in a multi-trailer vehicle combination comprising a tractor unit **110** and multiple trailing units, a coupling **130** may be added between each pair of trailing units. Further, in cases where the tractor unit **110** does not have a kingpin coupling **115,** a coupling **130** may also be used to tow a trailer unit **120.**

A tractor unit, such as the tractor unit **110,** is generally the foremost unit in a vehicle combination **100,** and may comprise the cabin for the driver, including steering controls, dashboard displays and the like. Generally, the tractor unit **110** is used to provide propulsion power for the vehicle combination **100.**

A trailing unit, such as the trailing units **120, 140,** is generally used to store goods that are being transported by the vehicle combination 100. A trailing unit may be a truck, trailer, and the like. A trailing unit may also provide propulsion to the vehicle combination **100.** A trailing unit without a front axle, such as the trailing units **120, 140,** is known as a semi-trailer. In vehicle combinations such as that shown in **FIG. 1A****,** vehicle motion management may be available on a unit level to receive requests from a manual or virtual driver to coordinate the propulsion, braking and steering.

Whilst one axle per trailer is shown in **FIG. 1A** and **1B****,** three tractor axles are shown in **FIG. 1A****,** and two tractor axles are shown in **FIG. 1B****,** it will be appreciated that any suitable number of axles may be provide on the respective units. It will also be appreciated that any number of the tractor axles and/or trailer axles may be driven axles, including zero (i.e. one of the units may include at least one driven axle while the other does not).

The vehicle combination **100** may comprise one or more sources of propulsion. For example, any of the tractor units **110** and the trailer units **120, 140** may comprise one or more electrical machines such as electric motors configured to drive, e.g. provide torque and/or steering to, one or more axles or individual wheels of the unit. The electrical machines of a unit can supply either a positive (propulsion) or negative (braking, reverse) force. Furthermore, each unit may comprise one or more sets of service brakes, for example frictional brakes such as pneumatic brakes, configured to supply a negative (braking, reverse) force. Each unit may comprise one or more batteries configured to provide power to the electrical machines. In some examples, electric motors may also be operated as generators, in order for the electric motors to generate braking force when required. The use of electrical machines to supply a negative force is known as regenerative braking. The energy recovered from regenerative braking can be stored in the batteries, and so regenerative braking is generally preferred to using service brakes. In some examples, a unit, most often a tractor unit **110,** may also include another source of propulsion, for example an internal combustion engine. The vehicle combination **100** also comprises a drivetrain to deliver mechanical power from the propulsion source (the electrical machines or the ICE) to the wheels. All units may provide propulsion to the vehicle combination **100.**

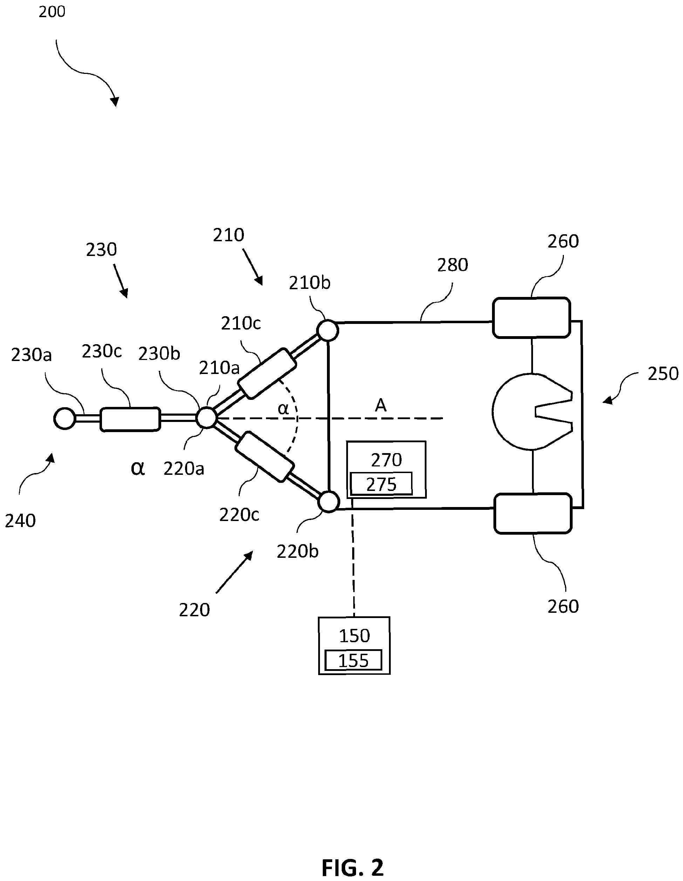

In a preferred embodiment, the coupling **130** is a dolly vehicle. A dolly vehicle is traditionally a passive vehicle comprising no driven or steerable axles and with a relatively short wheelbase, configured to link vehicle units together. The dolly vehicle **130** comprises ground wheels and is connectable to a preceding unit via a drawbar and to a trailing unit via a kingpin coupling around which the dolly vehicle **130** (and/or the trailing unit) can rotate, as known in the art. In this way, the dolly vehicle **130** provides both support and articulation to the trailing unit coupled to the dolly vehicle **130.** A particular type of dolly vehicle will be discussed in relation to **FIG. 2****.**

**FIG. 1B** shows the vehicle combination **100** with the trailing unit **120** coupled to the tractor unit **110,** and the trailing unit **140** coupled to the trailer unit **120** through the coupling (dolly vehicle) **130.** The vehicle combination **100** further comprises a controller **150** comprising processing circuitry **155** configured to perform various vehicle (unit) control functions, such as vehicle motion management. The controller **150** may be a global vehicle control unit. The vehicle **100** may further comprise a plurality of unit controllers **170** comprising processing circuitry **175,** for example a controller for each vehicle unit, wherein the unit controllers **170** are configured to receive control signals from the controller **150.** Vehicle motion management may therefore be available on a unit level to receive requests from a manual or virtual driver to coordinate the propulsion, braking and steering. The controller **150** may be local to the vehicle **100,** or may be a remote system, implemented at a distance from the vehicle **100.** In **FIG. 1B****,** the controller **150** is shown on the tractor unit **110** and a respective unit controller **170** is shown on each trailer unit **120, 140,** although it will be appreciated that the controller **150** may be implemented in any suitable unit of the vehicle combination **100.** The controller **150** may be communicatively coupled to the unit controllers **170** in any suitable way, for example via a circuit or any other wired, wireless, or network connection known in the art. Furthermore, the communicative coupling may be implemented as a direct connection between the unit controllers **170** and the controller **150** or may be implemented as a connection via one or more intermediate entities. One function of the controller **150** and the unit controllers **170** is to provide control inputs for the vehicle **100,** for example a force request.

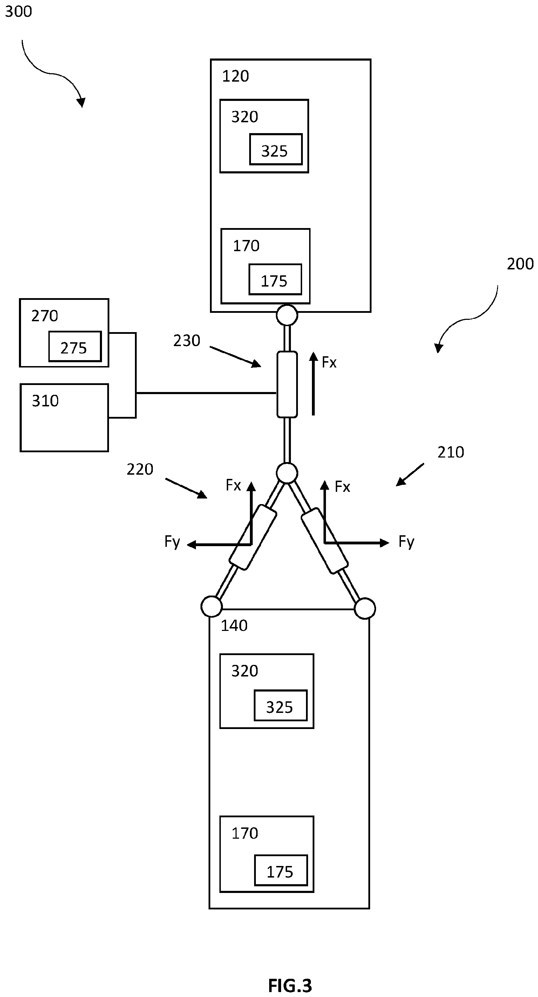

The controllers **150, 170** of vehicle **100** may further be communicatively connected to a sensor system **160** configured to provide input to the controllers **150, 170** relating to real-time operating conditions of the vehicle **100.** In this way, the controllers **150, 170** may adjust the operation of the vehicle **100** based on sensor data acquired by the sensor system **160.** The sensor system **160** may comprise sensors positioned on one or more units of the vehicle combination **100** and on the coupling **130** between two units. The sensor system **160** will be discussed in more detail in relation to **FIG. 3****.**

**FIG. 2** schematically shows a top view of a coupling **200** of the type considered in this disclosure. The coupling may be the coupling (dolly vehicle) **130** shown in **FIGs. 1A** and **1B****.** The coupling **200** is configured to connect to a first unit of the vehicle combination **100** at a first end **240** and to a second unit of the vehicle combination **100** at a second end **250.** The coupling **200** may be configured to connect a first trailer unit **120** to a second trailer unit **140,** as will be explained below. As discussed above, the coupling **200** may be configured to connect the tractor unit **110** to the first trailer unit **120.**

The first end **240** may comprise a drawbar structure configured to be connected to the first trailer unit **120.** As such, the coupling comprises a first strut **210** and a second strut **220** extending in a direction between the first and second ends **240, 250** of the coupling **200.** Each of the first strut **210** and the second strut **220** comprises a first end portion **210a, 220a** and a second end portion **210b, 220b.** The first and second struts **210, 220** are disposed at an angle *α* to each other. In some examples, the first end portions **210a, 220a** may be directly connectable to the first trailer unit **120.** In some examples, the coupling **200** further comprises a third strut **230** arranged at the first end **240** of the coupling **200.** The third strut **230** comprises a first end portion **230a** configured to be pivotably attached to the first trailing unit **120** and a second end portion **230b** configured to be pivotably connected to the first end portions **210a, 220a** of the first and second strut **210, 220.**

At the second end **250,** the second end portions **210b, 220b** of the first and second struts **210, 220** may be directly connectable to the second trailer unit **140.** In some examples, the coupling **200** further comprises a frame **280,** which in some examples is provided with at least two wheels **260.** The coupling **200** may comprise a kingpin coupling configured to be connected to the trailer unit **140.** The kingpin coupling may also be provided on the frame **280.**

The length of each of the first and second strut **210, 220** is adjustable such that the struts may be extended or retracted. The struts **210, 220** are provided with a respective actuator **210c, 220c** configured to actuate the adjustment of the length of the respective strut **210, 220.** The actuators **210c, 220c** may be for example a hydraulic, pneumatic or electronic actuators. The length of the third strut **230** may also be adjustable by provision of an actuator **230c,** similar to actuators **210c, 220c** of the first and second strut **210, 220.** Adjusting the length of the third strut 230 allows the distance between the vehicle units **120, 140** to be adjusted for different manoeuvring scenarios. The length adjustment may be obtained by any known method. For example, the struts may comprise a telescoping mechanism, a sliding mechanism or a threaded adjustment mechanism.

In some examples, the first end portion **210a, 220a** of each of the first and second strut **210, 220** is pivotable in relation to the first end portion **210a, 220a** of the other of the first and second strut **210, 220** such that the angle *α* can be adjusted. Furthermore, each second end portion **210b, 220b** of the first and second strut **210, 220** is pivotable in relation to the second unit **140** of the vehicle combination **100** (e.g. in relation to the frame **280),** such that a respective angle between each strut **210, 220** and the second unit **140** may be adjusted. By allowing the first and second struts **210, 220** to pivot in relation to each other and the second vehicle unit **140** in this way, relative motion between the struts **210, 220** and the second vehicle unit **140** is enabled and the geometry of the coupling **200** may be adjusted in a flexible way. In the example of **FIG. 2****,** the pivotable connections between the respective second end portions **210b, 220b** and the second unit **140** are in a fixed position, such that a translational movement of the struts **210, 220** in relation to the second unit **140** is prohibited. In some examples, the pivotable connections may be designed to also allow a translational movement, either laterally or longitudinally.

The coupling **200** may further comprise a controller **270** comprising processing circuitry **275.** The controller **270** may correspond to a unit controller **170** discussed in relation to **FIG. 1** and is configured to determine control inputs for the coupling **200** and/or receive control inputs from global controller **150.** For example, the controller **270** may be configured to determine a control input for adjusting the length of at least one of the struts **210, 220, 230** using the respective actuator **210c, 220c, 230c.**

**FIG. 3** schematically shows a system **300** for adjusting the force *F* acting on a coupling **200.** When the vehicle combination **100** is in motion, the coupling **200** may be subject to a longitudinal force *Fₓ* and a lateral force *F_{y}.* These forces arise from the dynamic interactions between the vehicle units **120, 140** and the coupling **200,** and are influenced by parameters such as the mass and load distribution of the second unit **140,** the articulation angle between the first unit **120** and the coupling **200,** the speed and acceleration of the vehicle combination **100,** and how the vehicle combination **100** is being manoeuvred.

A longitudinal force *Fₓ* is generated during acceleration, deceleration, and braking of the vehicle combination **100,** and is proportional to the rate of acceleration or deceleration of the vehicle combination **100** and the mass of the trailer **140.** For example, when the vehicle combination **100** accelerates, the coupling **200** will experience a longitudinal pulling force transmitted through the struts **210, 220, 230** of the coupling **200,** as the coupling **200** must overcome the inertia of the second unit **140** to move forward. Similarly, when the vehicle combination **100** decelerates or brakes, the coupling **200** will experience a longitudinal pushing force against the coupling **200,** generating a compressive force in the struts **210, 220, 230** caused by the inertia of the second unit **140.** Uneven or excessive longitudinal forces *Fₓ* can lead to stress concentration in the struts **210, 220, 230** and affect the overall stability of the vehicle combination **100.**

A lateral force *F_{y}* is generated primarily during turning manoeuvres, as the second unit **140** attempts to deviate from the path of the first unit **120** due to inertia. The lateral forces *F_{y}* are influenced by the articulation angle between the first unit **120** and the coupling **200** and the mass and centre of gravity of the second unit **140.** Excessive lateral forces *F_{y}* can compromise the stability of the vehicle combination **100,** leading to for example sway, oversteer, or j ack-knifing.

Consequently, being able to manage the magnitude and direction of the longitudinal force *Fₓ* and the lateral force *F_{y}* during operation of the vehicle combination **100** is crucial for improving the safety, efficiency, and reliability of the vehicle combination **100.** Therefore, the controllers **150, 170, 270** are configured to adjust the forces acting on the coupling **200** by determining a control input for adjusting the length of at least one of the first and second struts **210, 220** (and optionally the third strut **230).**

Adjusting the length of at least one of the struts **210, 220** will alter the geometry of the coupling **200** and the articulation angle between the first and second unit **120, 140,** and consequently affect the distribution of the forces acting on the coupling **200.** Therefore, the length of the struts **210, 220** may be used as a parameter for adjusting the distribution of forces acting on the coupling **200** in order to improve the manoeuvrability and stability of the vehicle combination.

The relationship between strut length and force distribution will be evident to a person skilled in the art, and may be estimated in a number of ways. For example, a force estimation system as known in the art (e.g. based on a combination of sensor data and a vehicle model) may be used to estimate the overall force acting on a coupling based on a given set of strut lengths. Such a system may be employed to estimate the resulting force acting on the coupling **200** after the length of at least one of the struts **210, 220** has been adjusted. Alternatively, a mathematical model, such as a linear or second-order approximation, may be implemented to estimate the resulting force after a length adjustment of at least one of the struts **210, 220.** The force acting on the coupling **200** may be further resolved into lateral and longitudinal force components acting on each strut **210, 220,** using trigonometry and the geometry of the coupling **200,** as will be understood by a skilled person and not explained in further detail. In this way, the strut length corresponding to a desired change of force may be estimated. In some examples, a proportional-integral-derivative (PID) controller may be implemented to regulate the lengths of the struts **210, 220** to achieve an objective, e.g. minimize an error or achieve a given state or value for a parameter (such as yaw rate) other relevant parameter. This eliminates the need to explicitly calculate a target force or length.

The system **300** shown in **FIG. 3** comprises the coupling **200** discussed in relation to **FIG. 2** connected to the first unit **120** and to the second unit **140** of the vehicle combination **100** discussed in relation to **FIG. 1****.** As discussed in relation to **FIG. 2****,** the coupling comprises a first strut **210** and a second strut **220** disposed at an angle *α* to each other. In this example, the coupling **200** further comprises a third strut **230,** however the third strut **230** is optional. Each of the struts **210, 220, 230** is provided with a respective actuator **210c, 220c, 230c,** configured to adjust the length of the respective strut **210, 220, 230.** In some examples, only the first and second strut **210, 220** are provided with a respective actuator **210c, 220c.**

The system **300** further comprises a number of controllers **170, 270** comprising processing circuitry **170, 275.** In **FIG. 3****,** the processing circuitry **175, 275** is shown as part of a respective controller **170, 270** of the first and second units **120, 140** and the coupling **200.** However, as discussed in relation to **FIG.1****,** processing circuitry **155** could also be implemented in a global vehicle control unit **150.** The processing circuitry **155, 175, 275** is configured to determine a control input for adjusting the length of at least one of the struts **210, 220, 230** using the respective actuator **210c, 220c, 230c,** in order to adjust a force *F* acting on the coupling **200.** As discussed above, the force F acting on the coupling **200** may be a lateral force *Fₓ* and/or a lateral force *F_{y}.*

In some examples, the processing circuitry **155, 175, 275** is configured to determine the control input based on sensor data. To this end, the system **300** may comprise a first sensor system **310.** The first sensor system **310** is configured to provide sensor data relating to the force *F* acting on the coupling **200** to the processing circuitry **155, 275.** The sensor data relates to one or more of the longitudinal force *Fₓ* and the lateral force *F_{y}* acting on each of the struts **210, 220, 230.** In this way, the control input may be determined based on a desired adjustment to the current loads experienced by the coupling **200** and how it is distributed between the respective struts **210, 220, 230.** This enables an appropriate control input to be determined for each strut **210, 220, 230** based on current conditions and interactions between the vehicle units **120, 140** and the coupling **200.**

The first sensor system **310** may comprise any suitable configuration of sensors. For example, the first sensor system **310** may comprise a load cell and/or a strain gauge positioned directly on each of the struts **210, 220, 230.** Load cells and/or strain gauges provide a simple solution to directly measure the force acting on each strut **210, 220, 230.** In some examples, the first sensor system **310** comprises a respective pressure sensor configured to measure a pressure inside each actuator **210c, 220c, 230c,** wherein the pressure indicates one or more of the longitudinal force *Fₓ* and the lateral force *F_{y}* acting on each of the struts **210, 220, 230.** In this way, the first sensor system **310** takes advantage of the pressurized hydraulic or pneumatic systems which in some examples are already present in the actuators.

In some examples, the system **300** comprises a second sensor system **320** configured to measure parameters of the vehicle units **120, 140** instead of forces acting on the coupling **200.** The second sensor system **320** may comprise any suitable configuration of sensors. For example, the second sensor system **320** may comprise wheel speed sensors, a steering angle sensor and an IMU provided on each of the first and second unit **120, 140.** The vehicle unit parameters may comprise one or more of an acceleration of each vehicle unit, a yaw rate of each vehicle unit, an articulation angle between vehicle units, a steering angle of the first vehicle unit, a wheel speed of one or more wheels of each of the first and second units of the vehicle combination, and a wheel force of one or more wheels of each of the first and second units of the vehicle combination. These parameters provide information of critical aspects of the motion of the vehicle combination **100,** wherein the acceleration and yaw rate reflect the overall dynamics of each unit **120, 140,** the articulation angle defines the relative orientation between each of the units **120, 140,** steering angle defines input control provided by the first unit **120** and wheel speed and forces provide insight into traction, load distribution, and interaction between wheels of the vehicle units **120, 140** and the road.

Sensor data relating to one or more vehicle unit parameters is provided to the processing circuitry **155, 175, 275,** which is configured to estimate one or more of the longitudinal force *Fₓ* and the lateral force *F_{y}* acting on each of the struts **210, 220, 230** based on the vehicle parameters, by using a vehicle model **325.** By estimating the forces acting on the struts **210, 220, 230** based on the vehicle unit parameters, sensors units do not need to be installed directly on the coupling **200,** and the system **300** is enabled to take advantage of vehicle sensors which may already be present on the vehicle units **120, 140.** The use of a vehicle model **325** further enables data from multiple vehicle unit sensors to be integrated, allowing the dynamic behaviour of the vehicle combination **100** and interaction between the vehicle units **120, 140** and the coupling **200** to be taken into account. In this way, the vehicle model **325** can accurately estimate how forces propagate through the system **300** and estimate the forces acting on each of the struts **210, 220, 230** of the coupling **200.**

Based on data relating to the forces acting on the coupling **200,** which may be provided by first sensor system **310** or second sensor system **320** as discussed above, the control input to provide a desired force adjustment by adjusting the length of at least one of the struts **210, 220, 230** is determined by the processing circuitry **155, 175, 275** of the system **300.** As discussed above, a skilled person will understand how the strut length correlates to force distribution and will understand how to implement this conversion. In this way, the processing circuitry **155, 175, 275** is enabled to implement an appropriate action, by causing a respective actuator **210c, 220c, 230c** of at least one of the struts **210, 220, 230** to adjust the length of the respective strut in order to adjust the forces acting on the coupling **200.**

In some examples, the control input may be determined such that such that a distance between the first and second unit of the vehicle combination is changed. In the case that the struts **210, 220** are symmetrically arranged around an axis A extending in a longitudinal direction trough the centre of the coupling **200** before a length adjustment of the struts **210, 220,** this may be achieved by determining the control input such that the resultant length of the first strut **210** is the same as the resultant length of the second strut **220** (i.e. the angle *α* remains unchanged). Controlling the distance between the first and second units **120, 140** is beneficial in scenarios where stability, load distribution, or aerodynamic efficiency is prioritized. For instance, during high-speed driving, increasing the distance between the first and second unit **120, 140** may enhance vehicle stability by reducing rearward amplification and sway. During straight-line travel, reducing the distance may instead be beneficial to optimize load distribution and reduce aerodynamic drag, leading to improved fuel efficiency.

In some examples, the control input may be determined such that that such that the angle between the first and second units **120, 140** of the vehicle combination **100** is changed. In the case that the struts **210, 220** are symmetrically arranged around the axis A before a length adjustment of the struts **210, 220,** this may be achieved by determining the control input such that the resultant length of first strut **210** is different from the resultant length of the second strut **220.** Controlling the angle between the first and second units **120, 140** is beneficial in scenarios where manoeuvrability and stability during turning are critical. For example, during low-speed operations such as navigating tight spaces, parking, or making sharp turns, adjusting the angle between the first and second unit **120,140** allows for a reduced turning radius. During dynamic driving conditions, such as during cornering or lane changes, controlling the angle can help stabilize the vehicle combination by mitigating trailer sway and counteracting forces that could lead to j ack-knifing.

In some examples, the control input may be determined such that both the angle and the distance between the first and second unit **120, 140** of the vehicle combination **100** are changed. The skilled person will understand that this may be achieved by altering the geometry of the coupling **200** in a number of ways, and will depend on the geometry of the coupling **200** before any further length adjustment of at least one of the struts **210, 220, 230** is implemented. Controlling both the angle and the distance between the first and second unit **120, 140** is particularly beneficial in scenarios that require a balance between manoeuvrability, stability, and efficiency. For example, adjusting both parameters can reduce turning radius while optimizing load distribution. Further, distance and angle may be controlled simultaneously to optimize for aerodynamics by reducing the distance between units to minimize air resistance while the angle is adjusted to ensure proper alignment between units **120, 140** to reduce unnecessary lateral forces. In this way, combined control of distance and angle between the first and second unit **120, 140** allows the vehicle combination **100** to dynamically adapt to varying driving conditions in a wide range of scenarios.

In some examples, the control input is determined in order to reach an objective. The objective may comprise at least one of improving vehicle stability, counteracting jack-knifing, reducing swept path width, reducing rearwards amplification and/or reducing air resistance. In particular, the desired force adjustment is determined based on the objective. In this way, the coupling **200** may be controlled to actively influence the dynamic behaviour of the units **120, 140** of the vehicle combination **100** by controlling the forces acting on the coupling **200.**

In some examples, the control input is designed to apply a force to at least one of the struts **210, 220, 230** of the coupling **200** over a time period *t*, with the force being delivered as one or more pulses. Controlling the duration *t* of the force application is important, as it directly influences the dynamic behaviour of the vehicle combination **100.** Since each strut **210, 220, 230** has a limited range of adjustment, once a strut is fully extended, it must be shortened again to enable further extension. As a result, the duration *t* for both extending and subsequently shortening a strut will affect the overall dynamics of the vehicle combination **100.** For example, a control input might be determined to quickly extend a strut to a desired length and then slowly shorten it, which will yield a different dynamic response compared to applying a limited force repeatedly in short pulses.

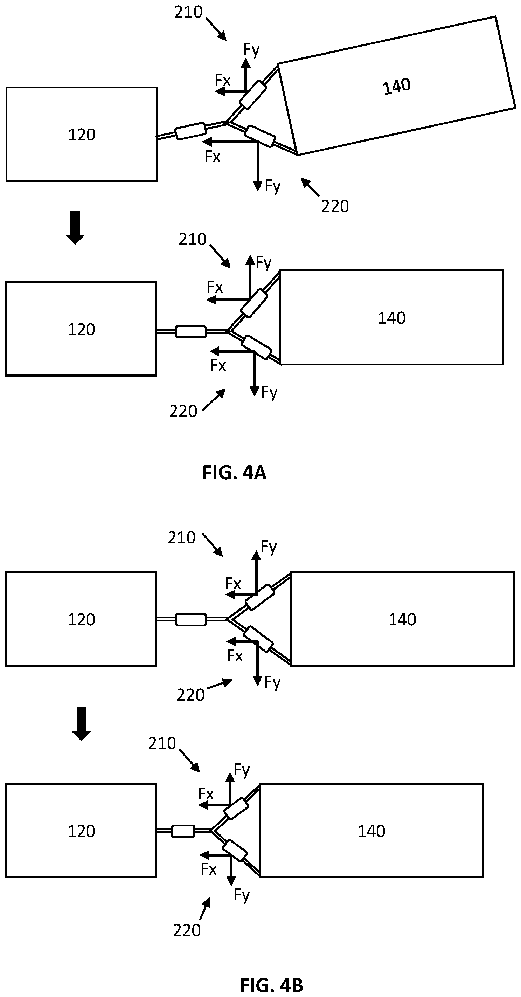

**FIG. 4A** schematically shows an example of forces acting on a coupling **200** between vehicle units **120,140** of a vehicle combination **100.** In this example, the data provided by first sensor system **310** or second sensor system **320** may inform the system **300** that the forces acting on strut **210** are unequal to the forces acting on strut **220,** which may indicate that a j ack-knifing situation is approaching. During j ack-knifing, the lateral forces *F_{y}* on the struts **210, 220** of the coupling **200** increase significantly as the second unit **140** swings sharply relative to the first unit **120.** The lateral forces will propagate unevenly through the struts **210, 220,** such that the strut which is the outer strut relative to the swing, in this case strut **220,** will experience higher lateral forces *F_{y}* as it resists the lateral swing of the second unit **140,** compared to the strut which is the inner strut relative to the swing, in this case strut **210.** The second unit **140** may further exert longitudinal forces *Fₓ* on the coupling **200** as the second unit **140** pushes towards the coupling **200.** The longitudinal forces *Fₓ* will also propagate unevenly through the struts **210, 220** as the second unit **140** will push unevenly on the coupling **200** during the jack-knifing motion, with the outer strut **220** typically experiencing more longitudinal force *Fₓ* compared to the inner strut **210.** This imbalance in lateral and longitudinal forces *Fₓ, F_{y}* acting on the two struts **210, 220** is a clear indicator of jack-knifing. Consequently, by monitoring these forces, the system **300** is enabled to identify when the forces deviate from expected values under normal operation. As a result, the system **300** may determine a control input to adjust the length of at least one of the struts **210, 220** based on the objective to counteract jack-knifing. For example, the length of the outer strut **220** may be shortened to counteract the excessive lateral forces *F_{y}* acting on the strut **220** by creating a pulling force towards the second unit **140,** while the length of the inner strut **210** may be extended to create a pushing force against the second unit **140** and reduce the angle between the first and second unit **120, 140.** In this way, the forces acting on the coupling **200** may be redistributed such that the vehicle combination **100** is enabled to regain stability and control.

**FIG. 4b** schematically shows a second example of forces acting on a coupling **200** between vehicle units **120,140** of a vehicle combination **100.** In this example, the data provided by first sensor system **310** or second sensor system **320** may inform the system **300** that the lateral forces *F_{y}* acting on the struts **210** and **220** are uneven and oscillatory in nature, which may indicate rearward amplification. Furthermore, the sensor data could show an increase in the magnitude of the lateral forces *F_{y}* over time, which corresponds to the growing instability of the vehicle combination **100** which occur during rearward amplification.

As a result, the system **300** may determine a control input based on the objective to reduce rearward amplification to adjust the length of each of the struts **210, 220** such that the resultant length of the first strut **210** is the same as the resultant length of the second strut **220.** In some situations, the length of the struts **210, 220** is adjusted and such that that the distance between the first and second unit **120, 140** of the vehicle combination **100** is increased which may help dampen oscillations in the system **300.** In some situations, the length of the struts **210, 220** is adjusted such that that the distance between the first and second unit **120, 140** of the vehicle combination **100** is decreased which may help reduce sway. By adjusting the distance between vehicle units **120, 140** in this way, the vehicle combination **100** may be stabilized and rearward amplification mitigated.

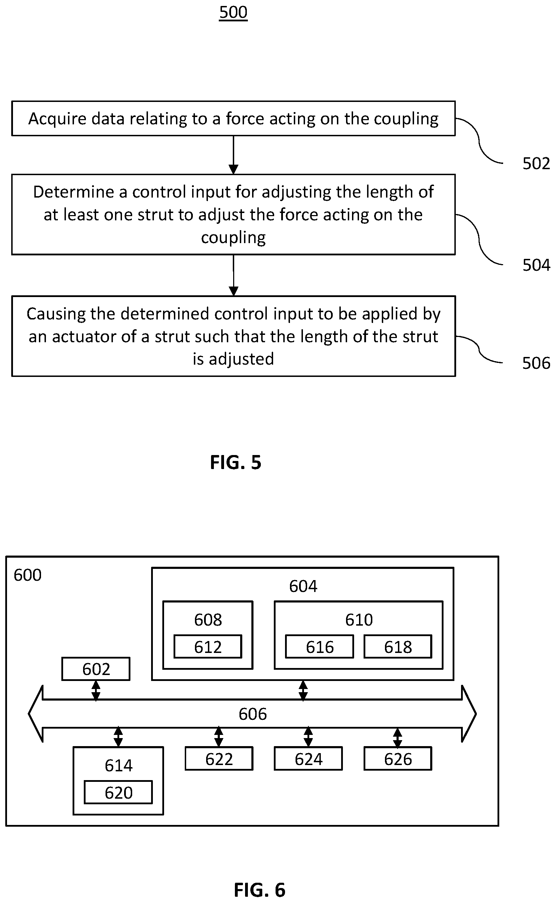

**FIG. 5** is a flow chart of a computer-implemented method **500** according to an example. The method **500** is for adjusting a force *F* acting on a coupling **200,** such as the one described in relation to **FIG. 2****.** The coupling **200** is configured to connect to a first unit **120** of a vehicle combination **100** at a first end **240** and to a second unit **140** of the vehicle combination **100** at a second end **250,** and comprises a first strut **210** and a second strut **220** disposed at an angle *α* to each other and a respective actuator **210c, 220c** configured to adjust the length of the respective strut **210, 220.** The method 500 enables the coupling **200** to be controlled in order to adjust the direction and the magnitude of the force *F*, such that the lateral and longitudinal motion of the vehicle units is controlled and the overall stability and manoeuvrability of the vehicle combination **100** improved. The method **500** may be implemented by processing circuitry of a computer system (e.g., the processing circuitry **175** of the controller **170** described in relation to **FIG. 1****,** the processing circuitry **275** of the controller **270** described in relation to **FIG. 2** and **3** or the processing circuitry **155** of the global controller **150** described in relation to **FIG. 1****).**

At **502,** data relating to a force *F* acting on the coupling **200** is acquired. The force *F* arises due to interactions between the first and second vehicle units **120,140** when the vehicle is operated, and propagates through the struts **210, 220** of the coupling **200.** For example, when the second unit **140** moves in a lateral direction in relation to the first unit **120,** the struts **210, 220** are subjected to uneven lateral forces *F_{y}.* When the vehicle combination **100** accelerates or brakes, the struts **210, 220** are subjected to longitudinal forces *Fₓ.* The lateral and longitudinal forces may be measured by a first sensor system **310** comprising sensors positioned directly on the struts **210, 220** of the coupling **200,** for example loads sensors or strain gauges. The forces may also be estimated using a vehicle model **325,** based on sensor data acquired by a second sensor system **320** comprising sensors positioned on the units **120, 140** of the vehicle combination **100.**

At **504,** a control input for adjusting the length of at least one of the first **210** and the second **220** struts is determined, to adjust the force *F* acting on the coupling **200.** The control input may be determined such that the resultant length of the first strut **210** is the same as the resultant length of the second strut **220,** such that the distance between the first and second unit **120, 140** of the vehicle combination **100** is changed. Optionally, the control input may be determined such that the resultant length of first strut **210** is different from the resultant length of the second strut **220.** In this way, the angle between the first and second unit **120, 140** of the vehicle combination **100** is changed. The appropriate action to implement depends on the current forces acting on the coupling **200.** In some examples, the control input is determined in order to reach an objective, such as improving vehicle stability, counteracting jack-knifing, reducing swept path width, reducing rearwards amplification and/or reducing air resistance.

At **506,** the determined control input is caused to be applied by the respective actuator **210c, 220c** of the at least one of the first and the second struts **210, 220** such that the length of the at least one strut is adjusted. This may comprise either extending or shortening the respective stut, for example by an hydraulic, pneumatic or electronic actuator. Since each strut **210, 220, 230** has a limited range of adjustment, once a strut is fully extended, it must be shortened again to enable further extension. Therefore, in some examples, the control input comprises a time period *t*, during which the length of the strut will be adjusted by applying an appropriate force as one or more pulses. Controlling the duration *t* of the force application will directly influences the dynamic behaviour of the vehicle combination **100.** For example, a control input might be determined to control an actuator to quickly extend the corresponding strut to a desired length by a single force application, and then to slowly shorten it again, which will yield a different dynamic response compared to applying a specific force repeatedly as a plurality of short pulses.

By adjusting the length of at least one strut **210, 220,** the magnitude and direction of the longitudinal *Fₓ* and lateral force *F_{y}* acting on the coupling **200** will be adjusted as well as the distance and/or angle between the first and second unit **120, 140.** In this way, by controlling the coupling **200,** the dynamic behaviour of the vehicle combination **100** may be adapted to varying driving conditions in a wide range of scenarios.

**FIG. 6** is a schematic diagram of a computer system **600** for implementing examples disclosed herein. The computer system **600** is adapted to execute instructions from a computer-readable medium to perform these and/or any of the functions or processing described herein. The computer system **600** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **600** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **600** may comprise at least one computing device or electronic device capable of including firmware, hardware, and/or executing software instructions to implement the functionality described herein. The computer system **600** may include processing circuitry **602** (e.g., processing circuitry including one or more processor devices or control units), a memory **604,** and a system bus **606.** The computer system **600** may include at least one computing device having the processing circuitry **602.** The system bus **606** provides an interface for system components including, but not limited to, the memory **604** and the processing circuitry **602.** The processing circuitry **602** may include any number of hardware components for conducting data or signal processing or for executing computer code stored in memory **604.** The processing circuitry **602** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **602** may further include computer executable code that controls operation of the programmable device.

The system bus **606** may be any of several types of bus structures that may further interconnect to a memory bus (with or without a memory controller), a peripheral bus, and/or a local bus using any of a variety of bus architectures. The memory **604** may be one or more devices for storing data and/or computer code for completing or facilitating methods described herein. The memory **604** may include database components, object code components, script components, or other types of information structure for supporting the various activities herein. Any distributed or local memory device may be utilized with the systems and methods of this description. The memory **604** may be communicably connected to the processing circuitry **602** (e.g., via a circuit or any other wired, wireless, or network connection) and may include computer code for executing one or more processes described herein. The memory **604** may include non-volatile memory **608** (e.g., read-only memory (ROM), erasable programmable read-only memory (EPROM), electrically erasable programmable read-only memory (EEPROM), etc.), and volatile memory **610** (e.g., random-access memory (RAM)), or any other medium which can be used to carry or store desired program code in the form of machine-executable instructions or data structures and which can be accessed by a computer or other machine with processing circuitry **602.** A basic input/output system (BIOS) **612** may be stored in the non-volatile memory **608** and can include the basic routines that help to transfer information between elements within the computer system **600.**

The computer system **600** may further include or be coupled to a non-transitory computer-readable storage medium such as the storage device **614,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **614** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **614** and/or in the volatile memory **610,** which may include an operating system **616** and/or one or more program modules **618.** All or a portion of the examples disclosed herein may be implemented as a computer program **620** stored on a transitory or non-transitory computer-usable or computer-readable storage medium (e.g., single medium or multiple media), such as the storage device **614,** which includes complex programming instructions (e.g., complex computer-readable program code) to cause the processing circuitry **602** to carry out actions described herein. Thus, the computer-readable program code of the computer program **620** can comprise software instructions for implementing the functionality of the examples described herein when executed by the processing circuitry **602.** In some examples, the storage device **614** may be a computer program product (e.g., readable storage medium) storing the computer program **620** thereon, where at least a portion of a computer program **620** may be loadable (e.g., into a processor) for implementing the functionality of the examples described herein when executed by the processing circuitry **602.** The processing circuitry **602** may serve as a controller or control system for the computer system **600** that is to implement the functionality described herein.

The computer system **600** may include an input device interface **622** configured to receive input and selections to be communicated to the computer system **600** when executing instructions, such as from a keyboard, mouse, touch-sensitive surface, etc. Such input devices may be connected to the processing circuitry **602** through the input device interface **622** coupled to the system bus **606** but can be connected through other interfaces, such as a parallel port, an Institute of Electrical and Electronic Engineers (IEEE) 1394 serial port, a Universal Serial Bus (USB) port, an IR interface, and the like. The computer system **600** may include an output device interface **624** configured to forward output, such as to a display, a video display unit (e.g., a liquid crystal display (LCD) or a cathode ray tube (CRT)). The computer system **600** may include a communications interface **626** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

According to certain examples, there is also disclosed:
**Example 1:** A system (300) comprising: a coupling (200) configured to connect to a first unit (120) of a vehicle combination (100) at a first end (240) and to a second unit (140) of the vehicle combination (100) at a second end (250), the coupling (200) comprising: a first strut (210) and a second strut (220) extending between the first and second ends (240, 250) of the coupling (200) and disposed at an angle (*α*) to each other, and a respective actuator (210c, 220c) provided on each of the first and second struts (210, 220), each actuator (210c, 220c) configured to adjust the length of the respective strut (210, 220); and processing circuitry (155, 175, 275, 602) configured to determine a control input for adjusting the length of at least one of the first and the second struts (210, 220) using the respective actuator (210c, 220c) to adjust a force (F) acting on the coupling (200).
**Example 2:** The system (300) of example 1, wherein each of the first strut (210) and the second strut (220) comprises a first end portion (210a, 220a) and a second end portion (210b, 220b), wherein each first end portion (210a, 220a) is pivotable in relation to the other first end portion (210a, 220a) and each second end portion (210b, 220b) is pivotable in relation to the second unit (140) of the vehicle combination (100).
**Example 3:** The system (300) of example 1 or 2, further comprising a first sensor system (310) configured to provide sensor data relating to the force (*F*) acting on the coupling (200) to the processing circuitry (155, 175, 275, 602).
**Example 4:** The system (300) of example 3, wherein the sensor data comprises one or more of a lateral force (*F_{y}*) and a longitudinal force (*Fₓ*) acting on each of the first and second struts (210, 220).
**Example 5:** The system (300) of example 4, wherein the first sensor system (310) comprises one or more of a load cell and a strain gauge positioned on each of the first and second struts (210, 220).
**Example 6:** The system (300) of example 4 or 5, wherein the sensor system comprises a respective sensor configured to measure a pressure inside each actuator (210c, 220c), the pressure indicating one or more of the lateral force (*F_{y}*) and the longitudinal force *(Fₓ)* acting on each of the first and second struts (210, 220).
**Example 7:** The system (300) of any preceding example, further comprising a second sensor system (320) configured to provide sensor data relating to one or more vehicle unit parameters to the processing circuitry (155, 175, 275, 602), and wherein the processing circuitry (155, 175, 275, 602) is configured to estimate one or more of a lateral force (*F_{y}*) and a longitudinal force *(Fₓ)* acting on each of the first and second struts (210, 220) based on the vehicle unit parameters using a vehicle model (325).
**Example 8:** The system (300) of example 7, wherein the one or more vehicle unit parameters comprises one or more of an acceleration of each vehicle unit, a yaw rate of each vehicle unit, an articulation angle between vehicle units, a steering angle of the first vehicle unit, a wheel speed of one or more wheels of each of the first and second units (120, 140) of the vehicle combination (100), and a wheel force of one or more wheels of each of the first and second units (120, 140) of the vehicle combination (100).
**Example 9:** The system (300) of any preceding example, wherein the control input is determined such that a distance between the first and second unit (120, 140) of the vehicle combination (100) is changed.
**Example 10:** The system (300) of examples 1 to 8, wherein the control input is determined such that an angle between the first and second unit (120, 140) of the vehicle combination (100) is changed.
**Example 11:** The system (300) of examples 9 to 10, wherein the control input is determined in order to reach an objective, comprising at least one of improving vehicle stability, counteracting jack-knifing, reducing swept path width, reducing rearwards amplification and/or reducing air resistance.
**Example 12:** The system (300) of any processing example, wherein the control input comprises a force to be applied as at least one pulse to the at least one of the first and the second struts (210, 220) during a time *t*.
**Example 13:** The system (300) of any preceding example, wherein the coupling (200) further comprises a third strut (230) comprising: a first end portion (230a) configured to be pivotably connected to the first unit (120) of the vehicle combination (100), a second end portion (230b), configured to be pivotably connected to the first end portions (210a, 220a) of the first and second strut (210, 220), and an actuator (230c) configured to adjust the length of the third strut (230) based on control input determined by the processing circuitry (155, 175, 275, 602).
**Example 14:** The system (300) of any preceding example, wherein each respective actuator (210c, 220c, 230c) is a hydraulic, pneumatic or electronic actuator.
**Example 15:** The system (300) of any preceding example, wherein the coupling (200) further comprises at least two wheels (260) and a kingpin coupling.
**Example 16:** A vehicle combination (100) comprising the system (300) of any preceding example.
**Example 17:** A computer system (150, 170, 270, 600) for adjusting a force (F) acting on a coupling (200) configured to connect to a first unit (120) of a vehicle combination (100) at a first end (240) and to a second unit (140) of the vehicle combination (100) at a second end (250), wherein the coupling (200) comprises a first strut (210) and a second strut (220) extending between the first and second ends (240, 250) of the coupling (200) and disposed at an angle (*α*) to each other and a respective actuator (210c, 220c) provided on each strut (210, 220) configured to adjust the length of the respective strut (210, 220), wherein the computer system (150, 170, 270, 600) comprises processing circuitry (155, 175, 275, 602) configured to: acquire data relating to a force (*F*) acting on the coupling (200), determine a control input for adjusting the length of at least one of the first and the second struts (210, 220), to adjust the force (*F*) acting on the coupling (200), and cause the determined control input to be applied by the respective actuator (210c, 220c) of the at least one of the first and the second struts (210, 220) such that the length of the at least one strut (210, 220) is adjusted.
**Example 18:** The computer system (150, 170, 270, 600) of example 17, wherein the processing circuitry (155, 175, 275, 602) is further configured to acquire sensor data relating to the force (*F*) acting on the coupling (200) from a first sensor system (310).
**Example 19:** The computer system (150, 170, 270, 600) of example 18, wherein the sensor data comprises one or more of a lateral force (*F_{y}*) and a longitudinal force *(Fₓ)* acting on each of the first and second struts (210, 220).
**Example 20:** The computer system (150, 170, 270, 600) of example 17 to 19, wherein the processing circuitry (155, 175, 275, 602) is further configured to acquire sensor data relating to one or more vehicle unit parameters from a second sensor system (320) and to estimate one or more of a lateral force (*F_{y}*) and a longitudinal force *(Fₓ)* acting on each of the first and second struts (210, 220) based on the vehicle unit parameters using a vehicle model (325).
**Example 21:** The computer system (600) of example 20, wherein the one or more vehicle unit parameters comprises one or more of an acceleration of each vehicle unit, a yaw rate of each vehicle unit, an articulation angle between vehicle units, a steering angle of the first vehicle unit, a wheel speed of one or more wheels of each of the first and second units (120, 140) of the vehicle combination (100), and a wheel force of one or more wheels of each of the first and second units (120, 140) of the vehicle combination (100).
**Example 22:** The computer system (150, 170, 270, 600) of example 17 to 21, wherein the control input is determined by the processing circuitry (155, 175, 275, 602) such that a distance between the first and second unit (120, 140) of the vehicle combination (100) is changed.
**Example 23:** The computer system (150, 170, 270, 600) of examples 17 to 21, wherein the control input is determined by the processing circuitry (155, 175, 275, 602) such that an angle between the first and second unit (120, 140) of the vehicle combination (100) is changed.
**Example 24:** The computer system (150, 170, 270, 600) of examples 22 to 23, wherein the control input is determined by the processing circuitry (155, 175, 275, 602) in order to reach an objective, comprising at least one of improving vehicle stability, counteracting jack-knifing, reducing swept path width, reducing rearwards amplification and/or reducing air resistance.
**Example 25:** The computer system (150, 170, 270, 600) of examples 17 to 24, wherein the control input comprises a force to be applied as at least one pulse to the at least one of the first and the second struts (210, 220) during a time *t*.
**Example 26:** The computer system (150, 170, 270, 600) of examples 17 to 25, wherein the processing circuitry (155, 175, 275, 602) is further configured to determine a control input for adjusting the length of a third strut (230) of the coupling (200) to adjust the force (*F*) acting on the coupling (200), and to cause the determined control input to be applied by an actuator (230c) of the third strut (230) such that the length of the third strut (230) is adjusted.
**Example 27:** A computer-implemented method (500) for adjusting a force (*F*) acting on a coupling (200) configured to connect to a first unit (120) of a vehicle combination (100) at a first end (240) and to a second unit (140) of the vehicle combination (100) at a second end (250), wherein the coupling (200) comprises a first strut (210) and a second strut (220) disposed at an angle *α* to each other and a respective actuator (210c, 220c) configured to adjust the length of the respective strut (200, 220), the computer-implemented method (500) comprising; acquiring (502), by processing circuitry (155, 175, 275, 602) of a computer system (150, 170, 270, 600), data relating to a force (*F*) acting on the coupling (200), determining (504), by the processing circuitry (155, 175, 275, 602), a control input for adjusting the length of at least one of the first and the second struts (210, 220), to adjust the force (*F*) acting on the coupling (200), causing, by the processing circuitry (155, 175, 275, 602), the determined control input to be applied by the respective actuator (210c, 220c) of the at least one of the first and the second struts (210, 220) such that the length of the at least one strut is adjusted.
**Example 28:** The computer-implemented method (500) of example 27, further comprising acquiring, by the processing circuitry (155, 175, 275, 602), sensor data relating to the force (F) acting on the coupling (200) from a first sensor system (310).
**Example 29:** The computer-implemented method (500) of example 28, wherein the sensor data comprises one or more of a lateral force (*F_{y}*) and a longitudinal force *(Fₓ)* acting on each of the first and second struts (210, 220).
**Example 30:** The computer-implemented method (500) of examples 27-29, further comprising acquiring, by the processing circuitry (155, 175, 275, 602), sensor data relating to one or more vehicle unit parameters from a second sensor system (320), and estimating, by the processing circuitry (155, 175, 275, 602), one or more of a lateral force (*F_{y}*) and a longitudinal force *(Fₓ)* acting on each of the first and second struts (210, 220) based on the vehicle unit parameters using a vehicle model (325).
**Example 31:** The computer-implemented method (500) of example 30, wherein the one or more vehicle unit parameters comprises one or more of an acceleration of each vehicle unit, a yaw rate of each vehicle unit, an articulation angle between vehicle units, a steering angle of the first vehicle unit, a wheel speed of one or more wheels of each of the first and second units (120, 140) of the vehicle combination (100), and a wheel force of one or more wheels of each of the first and second units (120, 140) of the vehicle combination (100).
**Example 32:** The computer-implemented method (500) of examples 27 to 31, comprising determining the control input such that a distance between the first and second unit (120, 140) of the vehicle combination (100) is changed.
**Example 33:** The computer-implemented method (500) of examples 27 to 31, comprising determining the control input such that an angle between the first and second unit (120, 140) of the vehicle combination (100) is changed.
**Example 34:** The computer-implemented method (500) of examples 32 to 33, comprising determining the control input in order to reach an obj ective, comprising at least one of improving vehicle stability, counteracting j ack-knifing, reducing swept path width, reducing rearwards amplification and/or reducing air resistance.
**Example 35:** The computer-implemented method (500) of examples 27-34, wherein the control input comprises a force to be applied as at least one pulse to the at least one of the first and the second struts (210, 220) during a time *t*.
**Example 36:** The computer-implemented method (500) of examples 27-35, wherein the method further comprises determining, by the processing circuitry (155, 175, 275, 602), a control input to adjust the length of a third strut (230) of the coupling (200) to adjust the force (*F*) acting on the coupling (200), and causing, by the processing circuitry (155, 175, 275, 602), the determined control input to be applied by an actuator (230c) of the third strut (230) such that the length of the third strut (230) is adjusted.
**Example 37:** A computer program product comprising program code for performing, when executed by processing circuitry (155, 175, 275, 602), the computer-implemented method (500) of example 27.
**Example 38:** A non-transitory computer-readable storage medium comprising instructions, which when executed by processing circuitry (155, 175, 275, 602), cause the processing circuitry (155, 175, 275, 602) to perform the computer-implemented method (500) of claim 27.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A system (300) comprising:
a coupling (200) configured to connect to a first unit (120) of a vehicle combination (100) at a first end (240) and to a second unit (140) of the vehicle combination (100) at a second end (250), the coupling (200) comprising:
a first strut (210) and a second strut (220) extending between the first and second ends (240, 250) of the coupling (200) and disposed at an angle (α) to each other, and
a respective actuator (210c, 220c) provided on each of the first and second struts (210, 220), each actuator (210c, 220c) configured to adjust the length of the respective strut (210, 220); and
processing circuitry (155, 175, 275, 602) configured to determine a control input for adjusting the length of at least one of the first and the second struts (210, 220) using the respective actuator (210c, 220c) to adjust a force (*F*) acting on the coupling (200).

2. The system (300) of claim 1, wherein each of the first strut (210) and the second strut (220) comprises a first end portion (210a, 220a) and a second end portion (210b, 220b), wherein each first end portion (210a, 220a) is pivotable in relation to the other first end portion (210a, 220a) and each second end portion (210b, 220b) is pivotable in relation to the second unit (140) of the vehicle combination (100).

3. The system (300) of any preceding claim, further comprising a first sensor system (310) configured to provide sensor data relating to the force (*F*) acting on the coupling (200) to the processing circuitry (155, 175, 275, 602).

4. The system (300) of claim 3, wherein the sensor data comprises one or more of a lateral force (*F_{y}*) and a longitudinal force (*Fₓ*) acting on each of the first and second struts (210, 220).

5. The system (300) of any preceding claim, further comprising a second sensor system (320) configured to provide sensor data relating to one or more vehicle unit parameters to the processing circuitry (155, 175, 275, 602), and wherein the processing circuitry (155, 175, 275, 602) is configured to estimate one or more of a lateral force (*F_{y}*) and a longitudinal force (*Fₓ*) acting on each of the first and second struts (210, 220) based on the vehicle unit parameters using a vehicle model (325).

6. The system (300) of any preceding claim, wherein the control input is determined such that a distance between the first and second unit (120, 140) of the vehicle combination (100) is changed.

7. The system (300) of any of claims 1 to 5, wherein the control input is determined such that an angle between the first and second unit (120, 140) of the vehicle combination (100) is changed.

8. The system (300) of claims 6 to 7, wherein the control input is determined in order to reach an objective, comprising at least one of improving vehicle stability, counteracting jack-knifing, reducing swept path width, reducing rearwards amplification and/or reducing air resistance.

9. The system (300) of any preceding claim, wherein the control input comprises a force to be applied as at least one pulse to the at least one of the first and the second struts (220, 220) during a time *t*.

10. The system (300) of any preceding claim, wherein the coupling (200) further comprises a third strut (230) comprising:
a first end portion (230a) configured to be pivotably connected to the first unit (120) of the vehicle combination (100),
a second end portion (230b), configured to be pivotably connected to the first end portions (210a, 220a) of the first and second strut (210, 220), and
an actuator (230c) configured to adjust the length of the third strut (230) based on control input determined by the processing circuitry (155, 175, 275, 602).

11. A vehicle combination (100) comprising the system (300) of any preceding claim.

12. A computer system (150, 170, 270, 600) for adjusting a force (*F*) acting on a coupling (200) configured to connect to a first unit (120) of a vehicle combination (100) at a first end (240) and to a second unit (140) of the vehicle combination (100) at a second end (250), wherein the coupling (200) comprises a first strut (210) and a second strut (220) extending between the first and second ends (240, 250) of the coupling (200) and disposed at an angle (α) to each other and a respective actuator (210c, 220c) provided on each strut configured to adjust the length of the respective strut (210, 220), wherein the computer system (150, 170, 270, 600) comprises processing circuitry (155, 175, 275, 602) configured to:
acquire data relating to a force (*F*) acting on the coupling (200),
determine a control input for adjusting the length of at least one of the first and the second struts (210, 220), to adjust the force (*F*) acting on the coupling (200), and
cause the determined control input to be applied by the respective actuator (210c, 220c) of the at least one of the first and the second struts (210, 220) such that the length of the at least one strut is adjusted.

13. A computer-implemented method (500) for adjusting a force (*F*) acting on a coupling (200) configured to connect to a first unit (120) of a vehicle combination (100) at a first end (240) and to a second unit (140) of the vehicle combination (100) at a second end (250), wherein the coupling (200) comprises a first strut (210) and a second strut (220) disposed at an angle (α) to each other and a respective actuator (210c, 220c) configured to adjust the length of the respective strut (200, 220), the method (500) comprising;
acquiring (502), by processing circuitry (155, 175, 275, 602) of a computer system (150, 170, 270, 600), data relating to a force (*F*) acting on the coupling (200),
determining (504), by the processing circuitry (155, 175, 275, 602), a control input for adjusting the length of at least one of the first and the second struts (210, 220), to adjust the force (*F*) acting on the coupling (200),
causing, by the processing circuitry (155, 175, 275, 602), the determined control input to be applied by the respective actuator (210c, 220c) of the at least one of the first and the second struts (210, 220) such that the length of the at least one strut is adjusted.

14. A computer program product comprising program code for performing, when executed by processing circuitry (155, 175, 275, 602), the computer-implemented method (500) of claim 13.

15. A non-transitory computer-readable storage medium comprising instructions, which when executed by processing circuitry (155, 175, 275, 602), cause the processing circuitry (155, 175, 275, 602) to perform the computer-implemented method (500) of claim 13.

## Amended claims

### Amended claims in accordance with Rule 137(2) EPC.

1. A system (300) comprising:
a coupling (200) configured to connect to a first unit (120) of a vehicle combination (100) at a first end (240) and to a second unit (140) of the vehicle combination (100) at a second end (250), the coupling (200) comprising:
a first strut (210) and a second strut (220) extending between the first and second ends (240, 250) of the coupling (200) and disposed at an angle (α) to each other, and
a respective actuator (210c, 220c) provided on each of the first and second struts (210, 220), each actuator (210c, 220c) configured to adjust the length of the respective strut (210, 220);
a first sensor system (310) configured to provide sensor data comprising one or more of a lateral force (*F_{y}*) and a longitudinal force (*Fₓ*) acting on each of the first and second struts (210, 220) to processing circuitry (155, 175, 275, 602); and
processing circuitry (155, 175, 275, 602) configured to determine a control input for adjusting the length of at least one of the first and the second struts (210, 220) using the respective actuator (210c, 220c) to adjust a lateral force (*F_{y}*) acting on the coupling (200) based on the sensor data.

2. The system (300) of claim 1, wherein each of the first strut (210) and the second strut (220) comprises a first end portion (210a, 220a) and a second end portion (210b, 220b), wherein each first end portion (210a, 220a) is pivotable in relation to the other first end portion (210a, 220a) and each second end portion (210b, 220b) is pivotable in relation to the second unit (140) of the vehicle combination (100).

3. The system (300) of any preceding claim, further comprising a second sensor system (320) configured to provide sensor data relating to one or more vehicle unit parameters to the processing circuitry (155, 175, 275, 602), and wherein the processing circuitry (155, 175, 275, 602) is configured to estimate one or more of a lateral force (*F_{y}*) and a longitudinal force (*Fₓ*) acting on each of the first and second struts (210, 220) based on the vehicle unit parameters using a vehicle model (325).

4. The system (300) of any preceding claim, wherein the control input is determined such that a distance between the first and second unit (120, 140) of the vehicle combination (100) is changed.

5. The system (300) of any of claims 1 to 3, wherein the control input is determined such that an angle between the first and second unit (120, 140) of the vehicle combination (100) is changed.

6. The system (300) of claim 4 or 5, wherein the control input is determined in order to reach an objective, comprising at least one of improving vehicle stability, counteracting jack-knifing, reducing swept path width, reducing rearwards amplification and/or reducing air resistance.

7. The system (300) of any preceding claim, wherein the control input comprises a force to be applied as at least one pulse to the at least one of the first and the second struts (220, 220) during a time *t*.

8. The system (300) of any preceding claim, wherein the coupling (200) further comprises a third strut (230) comprising:
a first end portion (230a) configured to be pivotably connected to the first unit (120) of the vehicle combination (100),
a second end portion (230b), configured to be pivotably connected to the first end portions (210a, 220a) of the first and second strut (210, 220), and
an actuator (230c) configured to adjust the length of the third strut (230) based on control input determined by the processing circuitry (155, 175, 275, 602).

9. A vehicle combination (100) comprising the system (300) of any preceding claim.

10. A computer system (150, 170, 270, 600) for adjusting a lateral force (*F_{y}*) acting on a coupling (200) configured to connect to a first unit (120) of a vehicle combination (100) at a first end (240) and to a second unit (140) of the vehicle combination (100) at a second end (250), wherein the coupling (200) comprises a first strut (210) and a second strut (220) extending between the first and second ends (240, 250) of the coupling (200) and disposed at an angle (α) to each other and a respective actuator (210c, 220c) provided on each strut configured to adjust the length of the respective strut (210, 220), wherein the computer system (150, 170, 270, 600) comprises processing circuitry (155, 175, 275, 602) configured to:
acquire sensor data comprising one or more of a lateral force (*F_{y}*) and a longitudinal force (*Fₓ*) acting on each of the first and second struts (210, 220),
determine a control input for adjusting the length of at least one of the first and the second struts (210, 220) to adjust the lateral force (*F_{y}*) acting on the coupling (200) based on the sensor data, and
cause the determined control input to be applied by the respective actuator (210c, 220c) of the at least one of the first and the second struts (210, 220) such that the length of the at least one strut and the lateral force (*F_{y}*) acting on the coupling (200) is adjusted.

11. A computer-implemented method (500) for adjusting a lateral force (*F_{y}*) acting on a coupling (200) configured to connect to a first unit (120) of a vehicle combination (100) at a first end (240) and to a second unit (140) of the vehicle combination (100) at a second end (250), wherein the coupling (200) comprises a first strut (210) and a second strut (220) disposed at an angle (α) to each other and a respective actuator (210c, 220c) configured to adjust the length of the respective strut (200, 220), the method (500) comprising;
acquiring (502), by processing circuitry (155, 175, 275, 602) of a computer system (150, 170, 270, 600), sensor comprising one or more of a lateral force (*F_{y}*) and a longitudinal force (*Fₓ*) acting on each of the first and second struts (210, 220),
determining (504), by the processing circuitry (155, 175, 275, 602), a control input for adjusting the length of at least one of the first and the second struts (210, 220), to adjust the lateral force (*F_{y}*) acting on the coupling (200) based on the sensor data,
causing, by the processing circuitry (155, 175, 275, 602), the determined control input to be applied by the respective actuator (210c, 220c) of the at least one of the first and the second struts (210, 220) such that the length of the at least one strut and the lateral force (*F_{y}*) acting on the coupling (200) is adjusted.

12. A computer program product comprising program code for performing, when executed by processing circuitry (155, 175, 275, 602), the computer-implemented method (500) of claim 11.

13. A non-transitory computer-readable storage medium comprising instructions, which when executed by processing circuitry (155, 175, 275, 602), cause the processing circuitry (155, 175, 275, 602) to perform the computer-implemented method (500) of claim 11.
